(19) Europäisches Patentamt / European Patent Office / Office européen des brevets

(11) **EP 2 180 604 A1**

(12) **EUROPEAN PATENT APPLICATION**
published in accordance with Art. 153(4) EPC

(43) Date of publication:
**28.04.2010 Bulletin 2010/17**

(51) Int Cl.:
***H04B 7/06*** *(2006.01)*

(21) Application number: **07855787.3**

(86) International application number:
**PCT/CN2007/003782**

(22) Date of filing: **25.12.2007**

(87) International publication number:
**WO 2009/018698 (12.02.2009 Gazette 2009/07)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **03.08.2007 CN 200710141233**

(71) Applicant: ZTE Corporation
**Shenzhen, Guangdong 518057 (CN)**

(72) Inventors:
• **PENG, Focai**
  **Shenzhen, Guangdong 518057 (CN)**
• **HAN, Cuihong**
  **Shenzhen, Guangdong 518057 (CN)**

(74) Representative: **Thinat, Michel**
  **Cabinet Weinstein**
  **56 A, rue du Faubourg Saint-Honoré**
  **75008 Paris (FR)**

(54) **METHODS AND SYSTEMS FOR SELECTING THE NUMBER OF MIMO DATA STREAMS**

(57) The present invention provides a method and system for determining the number of MIMO streams, wherein, the method includes: step S102, BS checks the buffer status of each UE, and determines, based on three kinds of CQI reported by a UE, the symbol level SNR of the first, the second and the third physical downlink shared channel corresponding to the three kinds of CQI. Step S104, the BS transmits a single stream to the UE, when the UE buffer is lower than the first threshold. Step S106, for a UE, BS transmits dual streams to the UE, when the minor SNR of the symbol level SNR of the second and the third physical downlink shared channel is larger than the symbol level SNR of the first physical downlink shared channel, and the total transmitting block size corresponding to the symbol level SNR of the second and the third physical downlink shared channel is larger than the transmitting block size corresponding to the symbol level SNR of the first physical downlink shared channel. Otherwise, the BS transmits a single stream to the UE. Repeat steps S102 through S106, until all the UEs belonging to the same BS are scheduled.

Fig. 1

## Description

## Field of the Invention

The present invention relates to communication field, in particular to a method and system for determining the number of MIMO streams.

## Background of the Invention

According to TS25.321-750 and TS36.321-800 specifications of the media access control layer (MAC) in the third Generation mobile communication Partnership Project (3GPP), a dispatcher of enhanced high speed sublayer (MAC-ehs; or MAC for Long Term Evolution (LTE)) of the media access control determines whether to transmit one or two streams in a Transmission Time Interval (TTI).

For the Wideband Code Division Multiple Access, WCDMA, access network (the Universal Mobile Telecommunications System Terrestrial Radio Access Network, UTRAN, and the Evolved UTRAN, E-UTRAN) supporting the Multi Input and Multi Output (MIMO) and the User Equipment (UE) supporting the MIMO, a base station, BS, (Node B and / or eNode B) can transmit one or two data blocks (maybe more in the future, such as 4 data blocks being transmitted concurrently) within one TTI to the UE.

Before the BS transmits the one or more data blocks, it shall be first determined which UE will be scheduled (of course, blind scheduling and Round Robin scheduling can also be used) .

Before the BS schedules a UE, the scheduling priority of the UE shall be first calculated so as to select which UE shall be scheduled first according to the order of the scheduling priority (of course, such a calculation can also be abandoned). Before the BS calculates the scheduling priority of a UE, it shall be first determined whether to transmit one or more data blocks to the UE (certainly, the number of the data blocks can also be selected randomly or alternatively).

## Summery of the Present Invention

With respect to the one or more problems mentioned above, the present invention provides a method and system for determining the number of the MIMO streams. From the simulation results, the method can greatly improve the sector throughput and the UE throughput.

The method for determining the number of the MIMO streams according to the present invention, comprises the following steps: step S102, BS checks the buffer status of each UE, and determines, based on three kinds of channel quality indications (CQI) reported by a UE, the symbol level SNR of the first high speed physical downlink shared channel (HS-PDSCH or PDSCH; called physical downlink shared channel), the symbol level SNR of the second physical downlink shared channel and the symbol level SNR of the third physical downlink shared channel corresponding to the three kinds of CQIs, wherein the three kinds of CQIs comprise the CQI with tendency to a single stream, and the CQI corresponding to the first stream and the CQI corresponding to the second stream in the CQI with tendency to dual streams; S104, BS transmits a single stream to the UE when the buffer of the UE is lower than the first threshold; S106, for one UE, BS transmits dual streams to the UE, when the minor SNR of the symbol level SNR of the second physical downlink shared channel and the symbol level SNR of the third physical downlink shared channel is larger than the symbol level SNR of the first physical downlink shared channel, and the total transmitting block sizes corresponding to the symbol level SNR of the second downlink shared channel and transmitting block size corresponding to the symbol level SNR of the third physical downlink shared channel is larger than the transmitting block size corresponding to the symbol level SNR of the first physical downlink shared channel. Otherwise, BS transmits a single stream to the UE. Repeat steps S102 through S106, until all the UEs belonging to the same BS are scheduled.

Wherein, the operation of the BS determining the symbol level SNR of the first physical downlink shared channel, the symbol level SNR of the second physical downlink shared channel and the symbol level SNR of the third physical downlink shared channel is executed in step S106. Wherein, the method is used in the WCDMA system.

The system for determining the number of MIMO streams according to the present invention, comprises: buffer checking means, implemented in the BS side, and configured to check the buffer status of each UE; an SNR calculating means, implemented on the BS side, and configured to determine, based on three kinds of CQIs reported by a UE, the symbol level SNR of the first physical downlink shared channel, the symbol level SNR of the second physical downlink shared channel and the symbol level SNR of the third physical downlink shared channel corresponding to the three kinds of CQIs, wherein the three kinds of CQIs comprise the CQI with tendency to a single stream, and the CQI corresponding to the first stream and the CQI corresponding to the second stream in the CQI with tendency to dual streams; and a stream number determining means, configured to determine to transmit a single stream to the UE when the buffer of the UE is lower than the first threshold; for one UE, to determine to transmit dual streams to the UE. When the minor SNR of the symbol level SNR of the second physical downlink shared channel and the symbol level SNR of the third downlink shared channel is larger than the symbol level SNR of the first physical downlink shared channel, and the total transmitting block sizes corresponding to the symbol level SNR of the second physical downlink shared channel and the transmitting block size corresponding to the symbol level SNR of the third physical downlink shared channel is larger than the transmitting block size corresponding to the symbol level SNR of the first physical downlink shared channel. Otherwise, the BS transmits a single stream to the UE.

The system according to the present invention is used in the Wideband Code Division Multiple Access, WCDMA, system and the Long Term Evolution (LTE) system.

The sector throughput and the UE throughput are greatly improved after the method and system for determining the number of the MIMO streams according to the present invention.

**Brief Description of the Drawings**

The drawings in the specification provide a further understanding to the present invention and constitute a part of the application. The exemplary embodiments of the present invention and the description thereof are only used to explain the present invention, and thus do not unduly limit the present invention, and wherein:

Fig.1 is a flow chart of the method for determining the number of the MIMO streams according to the present invention;

Fig.2 is a block diagram of the system for determining the number of the MIMO streams according to the present invention;

Fig.3 is a flow chart of the method for determining the number of the MIMO streams according to an embodiment of the present invention;

Fig.4 is a cumulative distribution function (CDF) of the sector throughput under different stream determining algorithms; and

Fig.5 is a cumulative distribution function (CDF) of the UE throughput under different stream determining algorithms.

**Detailed Description**

The embodiments of the present invention will be described in detail hereinafter with reference to the drawings.

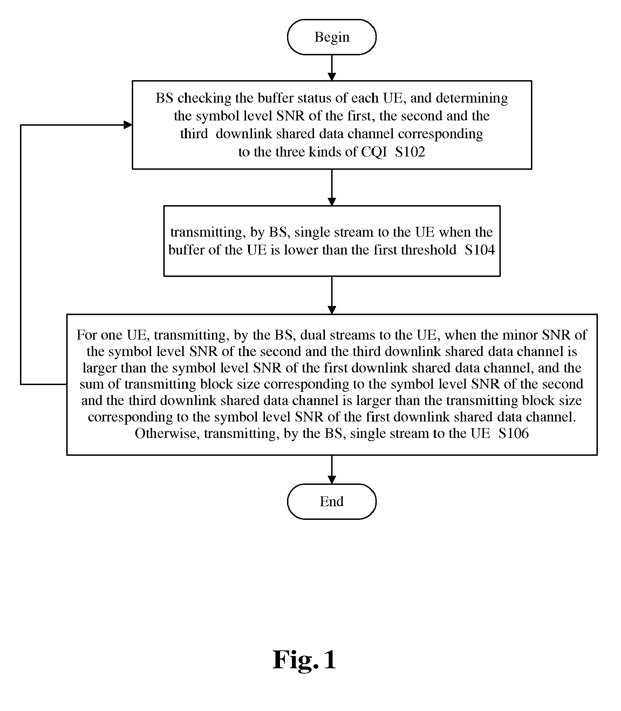

Fig.1 is a flow chart of the method for determining the number of the MIMO streams according to the present invention. As shown in Fig.1, the method comprises the following steps:

step S102, the BS checks the buffer status of each UE, and determines, based on three kinds of CQI reported by a UE, the symbol level SNR of the first physical downlink shared channel, the symbol level SNR of the second physical downlink shared channel and the symbol level SNR of the third physical downlink shared channel corresponding to the three kinds of CQI, wherein the three kinds of CQI comprises the CQI with tendency to a single stream, the CQI corresponding to the first stream and the CQI corresponding to the second stream in the CQI with tendency to dual streams;

step S104, BS transmits a single stream to the UE when the buffer of the UE is lower than the first threshold;

step S106, for one UE, BS transmits dual streams to the UE. when the minor SNR of the symbol level SNR of the second physical downlink shared channel and the symbol level SNR of the third physical downlink shared channel is larger than the symbol level SNR of the first physical downlink shared channel, and the total transmitting block size corresponding to the symbol level SNR of the second physical downlink shared channel and the transmitting block size corresponding to the symbol level SNR of the third physical downlink shared channel is larger than the transmitting block size corresponding to the symbol level SNR of the first physical downlink shared channel. Otherwise, the BS transmits a single stream to the UE.

Repeat steps S102 to S106, until all the UEs belonging to the same BS are scheduled.

Wherein, the operation of the BS determining the symbol level SNR of the first physical downlink shared channel, the symbol level SNR of the second physical downlink shared channel and the symbol level SNR of the third physical downlink shared channel is executed in step S106. Wherein, the method is used in the Wideband Code Division Multiple Access system.

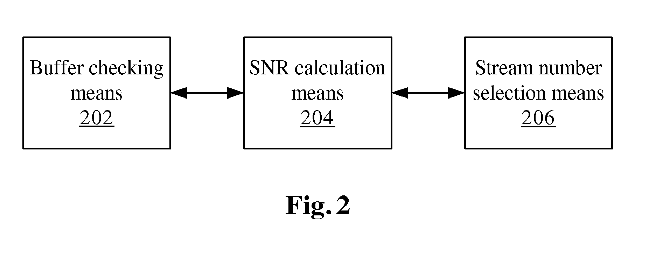

Fig.2 is a block diagram of the system for determining the number of the MIMO streams according to the present invention. As shown in Fig.2, the system comprises: buffer checking means 202, implemented in the BS side, and configured to check the buffer status of each UE; SNR calculation means 204, implemented in the BS side and configured to determine, based on three kinds of CQI reported by a UE, the symbol level SNR of the first physical downlink shared channel, the symbol level SNR of the second physical downlink shared channel and the symbol level SNR of the third physical downlink shared channel corresponding to the three kinds of CQI, wherein the three kinds of CQI comprise the CQI with tendency to the single stream, and the CQI corresponding to the first stream the CQI corresponding to and the second stream in the CQI with tendency to dual streams; and stream number determining means 206, configured to select to a transmit single stream to the UE when the buffer of the UE is lower than the first threshold; for one UE, to select to transmit dual streams to the UE. When the minor symbol level SNR of the second physical downlink shared channel and the third physical downlink shared channel is larger than the symbol level SNR of the first physical downlink shared channel, and the total transmitting block size corresponding to the symbol level SNR of the second physical downlink shared channel and the transmitting block size corresponding to the symbol level SNR of the third physical downlink shared channel is larger than the transmitting block size corresponding to the symbol level SNR of the first physical downlink shared channel. Otherwise, the BS transmits a single stream to the UE.

At present, the MIMO scheme based on 3GPP Release 7 is dual streams transmission diversity (D-Tx-AA) (the future 3GPP Release 8/9/10 editions will continue from and improve this D-TxAA scheme). The UE reports, according to the channel conditions thereof, the channel quality indication ($CQI_S$) with tendency to a signal stream (from 0 through 30) and $CQI_D$ with tendency to dual streams (from 31 through 255). After the BS receives the $CQI_D$, the $CQI_D$ is converted $CQI_1$ (from 0 through 14) corresponding to the first stream and $CQI_2$ (from 0 through 14) corresponding to the second stream.

In order to fully take advantage of the above information, the present invention provides a method for determining the number of the MIMO streams to be transmitted. As shown in Fig.1. If no specific description, the BS (Node B or eNode B), the Radio Network Controller (RNC), the enhanced BS (BS+ or eBS) combined with the RNC and the UE all support the MIMO of D-TxAA mode. In addition, if no specific description, the BS can be the BS without the RNC function, and also can be BS+ or eBS with the RNC function.

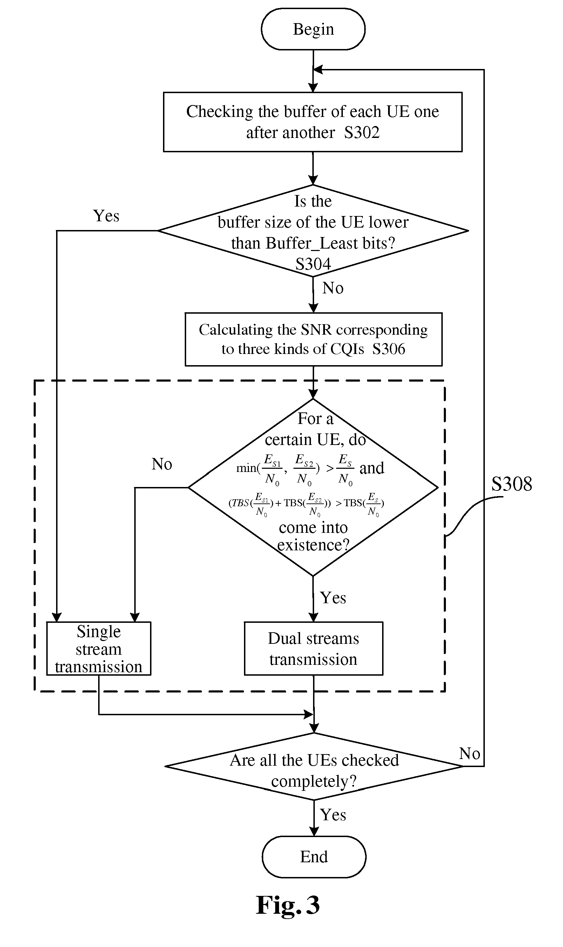

Fig.3 is a flow chart of the method for determining the number of the MIMO streams according to an embodiment of the present invention. As shown in Fig. 3, the method comprises the following steps:

step S302, the BS checks the buffers of each UE one by one, until all the UEs are checked.

step S304, if the buffer of one UE is lower than *Buffer_Least* bits (the first threshold), the BS just transmits a single stream to the UE. Here, the *Buffer_Least* equals to 9496 bits.

step S306, the BS calculates, based on the $CQI_S$, $CQI_1$ and $CQI_2$, the symbol level Signal-to-Noise Ratio (SNR) of the downlink shared channel corresponding to these three kinds of CQIs: $\frac{E_s}{N_0}$ (the symbol level SNR of the first downlink shared channel), $\frac{E_{s1}}{N_0}$ (the symbol level SNR of the second downlink shared channel) and $\frac{E_{s2}}{N_0}$ (the symbol level SNR of the third downlink shared channel). The step can be carried out before step S302, and also can be carried out after step S304).

S308, if, for a certain UE, it is fulfilled

$$\min(\frac{E_{S1}}{N_0}, \frac{E_{S2}}{N_0}) > \frac{E_S}{N_0} \quad \text{and}$$

$$(TBS(\frac{E_{S1}}{N_0}) + \text{TBS}(\frac{E_{S2}}{N_0})) > \text{TBS}(\frac{E_S}{N_0}) \quad \text{,} \quad \text{the BS}$$

transmits dual streams to the UE. Otherwise, the BS transmits a single stream. Wherein, the min(·) operation selects the minor one from the two operators; the *TBS*(·) operation is the transmission block size corresponding to the symbol level SNR or the transmission block size corresponding to the CQI (*TBS* (*CQI*)). The procedure is finished after all the UEs are scheduled.

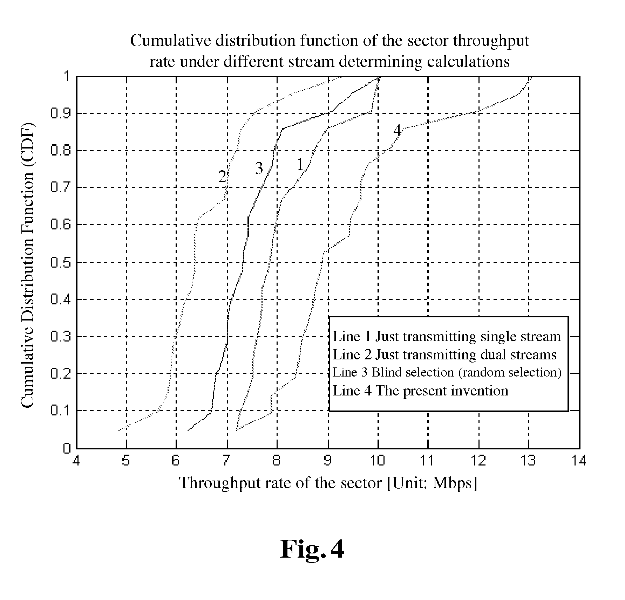

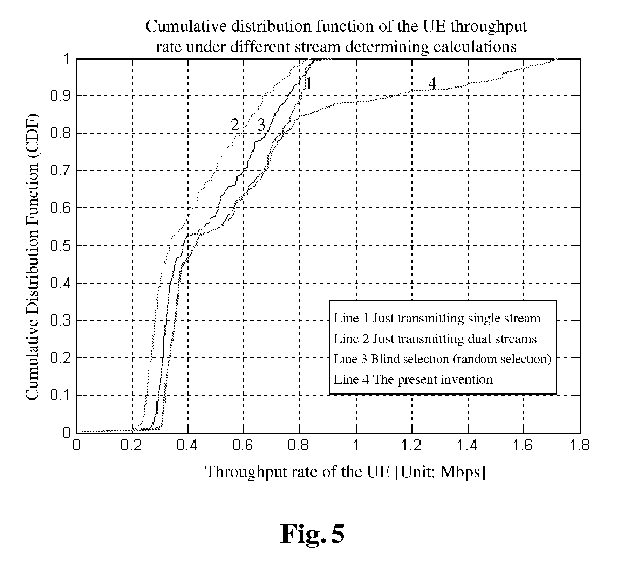

Through the above method, the BS can fully take advantage of the channel conditions of each UE and obtain higher sector throughput and higher UE throughput. Fig.4 is a cumulative distribution function (CDF) of the sector throughput under different stream determining algorithms. Fig.5 is a cumulative distribution function (CDF) of the UE throughput under different stream determining algorithms. The comparison of the simulation results of the method of the present invention and other methods are respectively shown in Fig.4 and Fig.5. From these two figures, the method of the present invention has a better system performance than the other three methods.

The above description is only to illustrate the preferred embodiments but not to limit the present invention. Various alterations and changes to the present invention are apparent to those skilled in the art. The scope defined in the claims shall comprise any modifications, equivalent substitutions and improvements etc. within the spirit and principle of the present invention.

**Claims**

1. A method for determining the number of MIMO streams, **characterized by**, comprising the following steps:

step S102, a Base Station, BS, checking the buffer status of each User Equipment, UE, and determining, based on three kinds of CQI reported by a UE, the symbol level signal-to-noise ratio, SNR, of the first physical downlink shared channel, the symbol level SNR of the second physical downlink shared channel and the symbol level SNR of the third physical downlink shared channel corresponding to said three kinds of CQI, wherein said three kinds of CQI comprises the CQI with tendency to a single stream, and the CQI corresponding to the first stream and the CQI corresponding to the second stream in the CQI with tendency to dual streams;

step S104, transmitting, by the BS, a single stream to said UE when the buffer of said UE is lower than the first threshold; and

step S106, for a UE, transmitting, by the BS, dual streams to the UE, when the minor SNR of the symbol level SNR of said second physical downlink shared channel and the symbol level SNR of said third physical downlink shared channel is larger than the symbol level SNR of said first physical downlink shared channel, and the total transmitting block size corresponding to the symbol level SNR of said second downlink shared channel and the transmitting block size corresponding to the symbol level SNR of said third physical downlink shared channel is larger than the transmitting block size corresponding to the symbol level SNR of said first physical downlink shared channel; otherwise, transmitting, by the BS, a single stream to the UE.

Repeating step S102 through step S106, until all the UEs belonging to the same BS are scheduled.

2. The method for determining the number of MIMO streams according to Claim 1, **characterized in** which the operation of said BS determining the symbol level SNR of said first physical downlink shared channel, the symbol level SNR of said second physical downlink shared channel and the symbol level SNR of said third physical downlink shared channel is executed in step S106.

3. The method for determining the number of MIMO streams according to Claim 1, **characterized in that** said method is used in the Wideband Code Division Multiple Access system.

4. A system for determining the number of MIMO streams, **characterized by**, comprising:

   buffer checking means, implemented in the Base Station, BS side, and configured to check the buffer status of each UE;
   SNR calculating means, implemented in the BS side, and configured to determine, based on three kinds of CQI reported by a UE, the symbol level SNR of the first physical downlink shared channel, the symbol level SNR of the second physical downlink shared channel and the symbol level SNR of the third physical downlink shared channel corresponding to said three kinds of CQI, wherein said three kinds of CQI comprise the CQI with tendency to a single stream, and the CQI corresponding to the first stream and the CQI corresponding to the second stream in the channel quality indication with tendency to dual streams; and

   stream number determining means, configured to determine to transmit a single stream to said UE when the buffer of said UE is lower than the first threshold; for one UE, to determine to transmit dual streams to said UE, when the minor SNR of the symbol level SNR of said second physical downlink shared channel and the symbol level SNR of said third physical downlink shared channel is larger than the symbol level SNR of said first physical downlink shared channel, and the total transmitting block size corresponding to the symbol level SNR of said second physical downlink shared channel and the transmitting block size corresponding to the symbol level SNR of said third downlink shared channel is larger than the transmitting block size corresponding to the symbol level SNR of said first downlink shared channel; otherwise, the BS transmitting a single stream to the UE.

5. The system for determining the number of MIMO streams according to Claim 4, **characterized in that** said system is used in the Wideband Code Division Multiple Access system.

```
                              ┌──────────┐
                              │  Begin   │
                              └────┬─────┘
                                   │
                                   ▼
┌──────────────────────────────────────────────────────────────┐
│   BS checking the buffer status of each UE, and determining    │
│       the symbol level SNR of the first, the second and the    │
│     third  downlink shared data channel corresponding          │
│                 to the three kinds of CQI  S102                 │
└──────────────────────────────────────────────────────────────┘
                                   │
                                   ▼
            ┌─────────────────────────────────────────┐
            │ transmitting, by BS, single stream to the UE when the │
            │ buffer of the UE is lower than the first threshold  S104 │
            └─────────────────────────────────────────┘
                                   │
                                   ▼
┌──────────────────────────────────────────────────────────────┐
│ For one UE, transmitting, by the BS, dual streams to the UE, when the minor SNR of │
│   the symbol level SNR of the second and the third downlink shared data channel is  │
│  larger than the symbol level SNR of the first downlink shared data channel, and the │
│  sum of transmitting block size corresponding to the symbol level SNR of the second  │
│  and the third downlink shared data channel is larger than the transmitting block size │
│    corresponding to the symbol level SNR of the first downlink shared data channel.   │
│         Otherwise, transmitting, by the BS, single stream to the UE  S106             │
└──────────────────────────────────────────────────────────────┘
                                   │
                                   ▼
                              ┌──────────┐
                              │   End    │
                              └──────────┘
```

# Fig. 1

| Buffer checking means 202 | ⟷ | SNR calculation means 204 | ⟷ | Stream number selection means 206 |

**Fig. 2**

Begin

Checking the buffer of each UE one
after another  S302

Is the
buffer size of the UE lower
than Buffer_Least bits?
S304

Yes

No

Calculating the SNR corresponding
to three kinds of CQIs  S306

For a
certain UE, do
$\min(\frac{E_{S1}}{N_0}, \frac{E_{S2}}{N_0}) > \frac{E_s}{N_0}$ and
$(TBS(\frac{E_{S1}}{N_0}) + TBS(\frac{E_{S2}}{N_0})) > TBS(\frac{E_s}{N_0})$
come into
existence?

No

Yes

S308

Single
stream
transmission

Dual streams
transmission

Are all the UEs checked
completely?

No

Yes

End

Fig. 3

Cumulative distribution function of the sector throughput
rate under different stream determining calculations

Fig. 4

Cumulative distribution function of the UE throughput rate under different stream determining calculations

Line 1 Just transmitting single stream
Line 2 Just transmitting dual streams
Line 3 Blind selection (random selection)
Line 4 The present invention

Throughput rate of the UE [Unit: Mbps]

**Fig. 5**

# INTERNATIONAL SEARCH REPORT

| | |
|---|---|
| International application No. | |
| | PCT/CN2007/003782 |

**A.  CLASSIFICATION OF SUBJECT MATTER**

H04B 7/06(2006.01)i

According to International Patent Classification (IPC) or to both national classification and IPC

**B.  FIELDS SEARCHED**

Minimum documentation searched (classification system followed by classification symbols)

IPC:H04B 7/06

Documentation searched other than minimum documentation to the extent that such documents are included in the fields searched

Electronic data base consulted during the international search (name of data base and, where practicable, search terms used)

WPI;EPODOC;PAJ;CPRS;CNKI: MIMO,data,stream?,buffer,SIR,channel,quality,identifications,CQI,number,single,double

**C.  DOCUMENTS CONSIDERED TO BE RELEVANT**

| Category* | Citation of document, with indication, where appropriate, of the relevant passages | Relevant to claim No. |
|---|---|---|
| A | CN1960199 A （YUANDONGLI COMMUNICATION TECH CO LTD） 09 May 2007 （09.05.2007） see the whole document | 1-5 |
| A | CN1864379 A （LG ELECTRONICS INC）15 Nov. 2006（15.11.2006） see the whole document | 1-5 |
| A | CN1653721 A （QUALCOMM INC） 10 Aug. 2005 （10.08.2005） see the whole document | 1-5 |
| A | US2007160156 A1 （Ezer Melzer,Tel-Aviv(IL);Daniel Yellin,R'anana(IL)） 12 Jul. 2007 （12.07.2007） see the whole document | 1-5 |

| ☐ Further documents are listed in the continuation of Box C. | ☒ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 Apr. 2008 （24.04.2008） | **15 May 2008 (15.05.2008)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>CAO,Yachun<br><br>Telephone No. (86-10)62411427 |

Form PCT/ISA/210 (second sheet) (April 2007)

## INTERNATIONAL SEARCH REPORT
Information on patent family members

International application No.

PCT/CN2007/003782

| Patent Documents referred in the Report | Publication Date | Patent Family | Publication Date |
|---|---|---|---|
| CN1960199 A | 09.05.2007 | NONE | |
| CN1864379 A | 15.11.2006 | KR20050032278 A | 07.04.2005 |
| | | WO2005032154 A2 | 07.04.2005 |
| | | US2005147177 A1 | 07.07.2005 |
| | | EP1668855 A2 | 14.06.2006 |
| CN1653721 A | 10.08.2005 | US6862271 B2 | 01.03.2005 |
| | | CA2477536 A | 04.09.2003 |
| | | WO03073646 A1 | 04.09.2003 |
| | | AU2003213214 A1 | 09.09.2003 |
| | | EP1479177 A 1 | 24.11.2004 |
| | | MXPA04008245 A | 11.01.2005 |
| | | BR0307948 A | 29.03.2005 |
| | | JP2005518755T T | 23.06.2005 |
| US2007160156 A1 | 12.07.2007 | NONE | |

Form PCT/ISA/210 (patent family annex) (April 2007)